(19) Europäisches Patentamt / European Patent Office / Office européen des brevets

(11) **EP 3 738 658 B1**

(12) **FASCICULE DE BREVET EUROPEEN**

(45) Date de publication et mention
de la délivrance du brevet:
**28.01.2026 Bulletin 2026/05**

(21) Numéro de dépôt: **20173812.7**

(22) Date de dépôt: **11.05.2020**

(51) Classification Internationale des Brevets (IPC):
**B01D 29/35** *(2006.01)*    **B01D 29/52** *(2006.01)*
**B01D 29/66** *(2006.01)*    **B01D 35/147** *(2006.01)*

(52) Classification Coopérative des Brevets (CPC):
**B01D 29/35; B01D 29/52; B01D 29/668;**
**B01D 35/1475;** B01D 2201/0453; B01D 2201/4038

(54) **FILTRE À RÉGÉNÉRATION AUTOMATIQUE ET PROCÉDÉ DE DÉCOLMATAGE D'UN TEL FILTRE**

FILTER ZUR AUTOMATISCHEN WIEDERAUFBEREITUNG UND VERFAHREN ZUR REINIGUNG EINES SOLCHEN FILTERS

FILTER WITH AUTOMATIC REGENERATION AND METHOD FOR UNCLOGGING SUCH A FILTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.05.2019 FR 1905015**

(43) Date de publication de la demande:
**18.11.2020 Bulletin 2020/47**

(73) Titulaire: **Rellumix**
**95800 Cergy (FR)**

(72) Inventeur: **DOMBROWSKI, Frédéric**
**95800 CERGY (FR)**

(74) Mandataire: **Casalonga**
**Casalonga & Partners**
**Bayerstraße 71/73**
**80335 München (DE)**

(56) Documents cités:
EP-A1- 2 727 639          WO-A1-2007/130029
DE-A1- 102017 004 661   DE-A1- 3 301 694
DE-U1- 202012 100 368   US-A- 2 429 417

**Description**

La présente invention concerne un filtre à régénération automatique et un procédé de décolmatage d'un tel filtre.

Un filtre sert à séparer des éléments dans un flux. La plupart du temps, un filtre comprend un élément filtrant qui retient des éléments indésirables du flux et laissant passer librement les éléments utiles. Par exemple, dans le cas d'un filtre recevant de l'eau chargée en sable, l'élément filtrant forme une barrière retenant les particules de sable et laissant passer librement l'eau filtrée.

Après un certain temps, il se produit généralement un colmatage de l'élément filtrant. Il en résulte une détérioration de la qualité de la filtration. Cette détérioration est d'autant plus susceptible de se produire que le fluide est fortement chargé en matière en suspension.

Pour pallier cet inconvénient, il a été proposé des filtres à régénération permettant de décolmater l'élément filtrant. On préserve ainsi l'efficacité du filtre sur une plus longue période.

Cependant, les filtres à régénération existant ont tous au moins une pièce en frottement avec une autre. Ces pièces en frottement s'usent rapidement, ce qui finit par nuire à l'efficacité du filtre. Lorsque les matières en suspension sont des matières fortement abrasives ou des matières adhérentes, cette usure est d'autant plus rapide.

Au vu de ce qui précède, l'invention vise à remédier aux inconvénients précités.

Le document DE 33 01 694 décrit un filtre comprenant une chambre d'entrée, une chambre de sortie et des éléments filtrants.

En particulier, l'invention vise à maintenir une forte efficacité de filtration à long terme, en particulier pour des fluides fortement chargés et/ou des fluides chargés en matières abrasives ou en matières adhésives.

A cet effet, il est proposé un filtre tel que défini dans la revendication 1

Le moyen de fermeture permet d'isoler l'enceinte du volume amont de sorte à couper l'arrivée en fluide à filtrer. Le moyen d'évacuation permet alors de diminuer la pression dans l'enceinte, qui devient inférieure à la pression dans le volume aval. Il en résulte un flux de fluide propre traversant l'élément filtrant en sens inverse au sens de filtration. Ce flux décolmate l'élément filtrant, les boues de décolmatage étant évacuées par le moyen d'évacuation.

Un tel agencement permet de disposer d'un moyen de fermeture qui se met en position fermée dès que le moyen d'évacuation est mis en œuvre et reste en position ouverte sinon, de sorte à simplifier l'utilisation du dispositif.

Les vannes permettent de réguler les pressions en volume amont et volume aval pour modifier l'efficacité de la filtration et/ou du décolmatage en fonction du cas d'utilisation.

De telles plages de pression de la première et de la deuxième vannes favorisent particulièrement le décolmatage d'éléments filtrant lors d'une utilisation pour un fluide chargé entre 0,2 % et 50 % en matière en suspension.

Selon un mode de réalisation avantageux, le moyen filtrant comprend un premier groupe filtrant et un second groupe filtrant, chaque groupe filtrant comprenant respectivement un élément filtrant, une enceinte et un moyen de fermeture, le moyen d'évacuation comprenant au moins un premier groupe d'évacuation et un second groupe d'évacuation, chaque groupe d'évacuation comprenant un collecteur, un conduit d'évacuation et une vanne guillotine, le premier groupe d'évacuation étant capable d'évacuer l'enceinte du premier groupe filtrant, le second groupe d'évacuation étant capable d'évacuer l'enceinte du second groupe filtrant.

Un tel mode de réalisation permet de réaliser le décolmatage du(des) groupe(s) filtrant relié(s) à l'un des groupes d'évacuation tout en gardant les autres groupes filtrant actifs. Il en résulte une continuité du débit à travers le filtre.

Avantageusement, le moyen filtrant comprend un troisième groupe filtrant comprenant un élément filtrant, une enceinte, et un moyen de fermeture, le collecteur du premier groupe d'évacuation étant doté d'un collecteur en communication fluidique avec l'enceinte du premier groupe filtrant et avec l'enceinte du troisième groupe filtrant.

On limite ainsi, lorsqu'il y a un grand nombre de groupes filtrant, la durée du décolmatage des groupes filtrant en utilisant un même groupe d'évacuation pour plusieurs groupes filtrant.

Avantageusement :

$$n = k \times i \quad 3 \leq i \leq 5$$

où n est le nombre de groupes filtrant et k est le nombre de groupes d'évacuations.

La vanne guillotine permet de diminuer rapidement la pression dans l'enceinte pour rendre le décolmatage encore plus rapide.

Selon un autre aspect, il est proposé un procédé de décolmatage d'un filtre tel que défini précédemment comprenant les étapes définies dans la revendication 5.

Selon un mode de mise en œuvre avantageux, la durée de l'étape d'attente est comprise entre 0,4 seconde et 1,5 secondes.

Une durée comprise dans une telle plage permet de décolmater efficacement l'élément filtrant et d'évacuer la grande majorité des boues de décolmatage, sans pour autant rendre le groupe filtrant concerné indisponible pendant une durée excessive.

L'invention a pour objet également le procédé tel que défini à la revendication 7.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] est une représentation en coupe en perspective d'un filtre selon l'invention,
[Fig 2] est une vue en coupe en perspective d'un plateau inférieur du filtre de la figure 1,
[Fig 3] est une vue en coupe d'un groupe filtrant du filtre des figures 1 et 2, et
[Fig 4] représente schématiquement un procédé de décolmatage du filtre des figures 1 à 3.

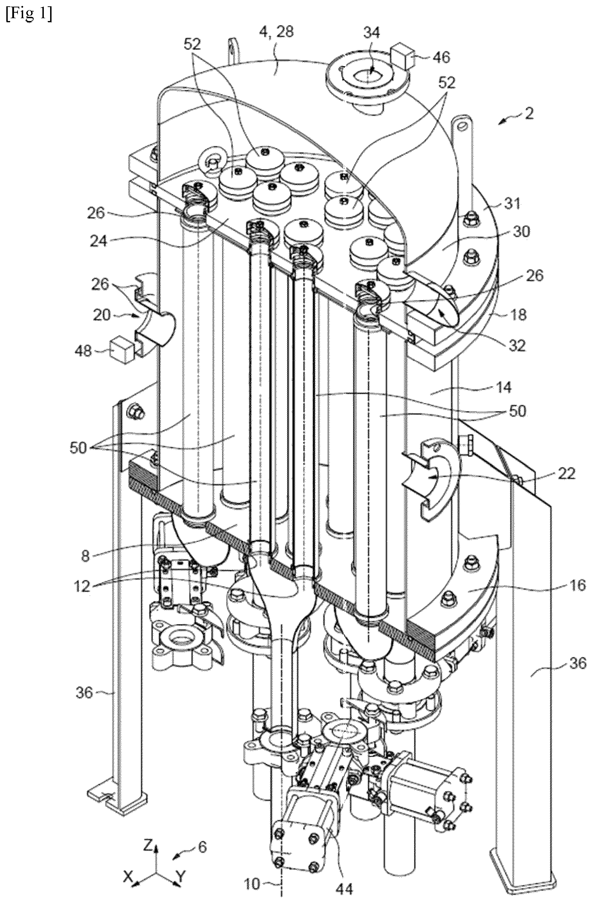

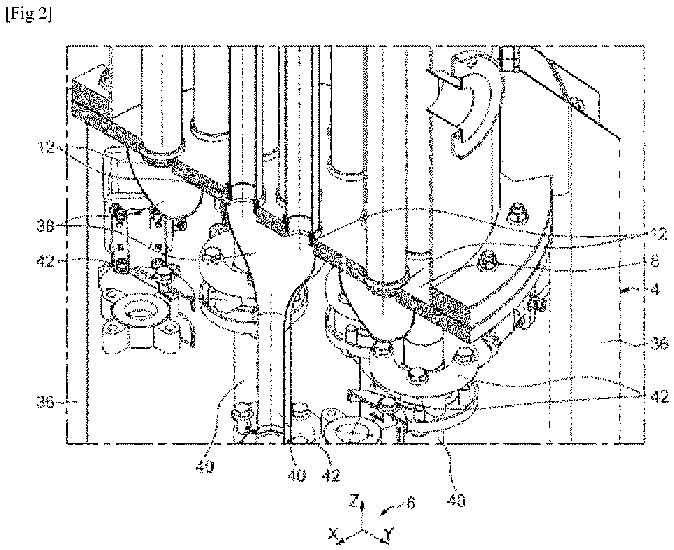

En référence aux figures 1 et 2, on a schématiquement représenté un filtre 2. Le filtre 2 reçoit un fluide à filtrer, retient des éléments indésirables contenus dans le fluide à filtrer et laisse passer librement le fluide filtré. Le fluide à filtrer peut être chargé avec de la matière en suspension. En particulier, le fluide à filtrer peut être chargé avec un matériau fortement abrasif pouvant par exemple être du sable, des cailloux, de la laitance de béton ou encore des copeaux, ou un adhésif. Le filtre 2 comporte notamment un bâti 4.

On définit une base vectorielle orthonormale directe 6 attachée au bâti 4. La base 6 est constituée d'un vecteur X, d'un vecteur Y et d'un vecteur Z. Le plan de coupe des figures 1 à 3 est perpendiculaire au vecteur X.

Dans la présente demande, les termes « inférieur », « supérieur », « horizontal » et « vertical » seront compris comme se référant par rapport à la base 6 lorsque le filtre 2 est orienté normalement, c'est-à-dire en supposant le vecteur Z dirigé verticalement vers le haut.

Le bâti 4 comporte un plateau inférieur 8. Le plateau 8 est un cylindre de révolution autour d'un axe 10. L'axe 10 est parallèle au vecteur Z.

Sauf indication contraire, les termes « axial », « axialement », « radial » et « radialement » seront compris comme se référant relativement à l'axe 10.

En référence à la figure 2, le plateau 8 comprend trente-deux (32) alésages cylindriques 12 dirigés par le vecteur Z et à section axiale circulaire. Les alésages 12 sont identiques les uns par rapport aux autres. Plus particulièrement, les alésages 12 sont regroupés en huit (8) groupes 12-1, 12-2, ..., 12-8, chaque groupe étant constitué de quatre (4) alésages 12. Quel que soit un entier i compris entre 1 et 8, l'alésage le plus proche d'un alésage du groupe 12-i est forcément l'un des trois autres alésages du groupe 12-i. Par exemple, l'alésage le plus proche d'un alésage du groupe 12-1 fait forcément partie du groupe 12-1.

Le bâti 4 comporte un cylindre 14 à section axiale circulaire autour de l'axe 10. Le cylindre 14 comprend une couronne inférieure 16 et une couronne supérieure 18. Les couronnes 16, 18 sont respectivement situées aux extrémités axiales inférieure, supérieure du cylindre 14. La couronne 16 est destinée à permettre une fixation étanche au plateau 8.

Le cylindre 14 comprend un conduit de sortie 20 et un conduit d'entrée 22. Chaque conduit 20, 22 comprend un alésage cylindrique dirigé selon la direction radiale. Le conduit de sortie 20 est destiné à évacuer un fluide filtré par le filtre 2. Le conduit d'entrée 22 est destiné à alimenter le filtre 2 avec un fluide de rinçage, par exemple du fluide filtré.

Le bâti 4 comporte un plateau supérieur 24. Le plateau 24 forme une paroi supérieure du volume intérieur du cylindre 14. Le plateau 24 est cylindrique à section axiale circulaire autour de l'axe 10. Comme le plateau 8, le plateau 24 comporte une pluralité d'alésages cylindriques 26. Les alésages 26 sont sensiblement identiques aux alésages 12.

Le bâti 4 comporte un couvercle 28. Le couvercle 28 présente une forme de révolution autour de l'axe 10. Le couvercle 28 comporte une portion cylindrique 30 à section axiale circulaire autour de l'axe 10. Le couvercle 28 comporte une couronne inférieure 31 mettant en œuvre une fixation étanche avec la couronne 18 en intercalant le plateau 24.

Le couvercle 28 comporte un conduit d'entrée 32 et un conduit de sortie 34. Le conduit 32 est formé par un tube cylindrique dirigé par la direction radiale. Le conduit 34 est formé par un alésage cylindrique dirigé par le vecteur Z. Le conduit 32 est destiné à permettre l'alimentation du filtre 2 en fluide à filtrer. Le conduit 34 est destiné à permettre l'évacuation du fluide à filtrer en cas de surpression dans le volume délimité par le plateau 24 et le couvercle 28.

Le bâti 4 comporte trois pieds 36 (seulement deux pieds 36 sont représentés sur les figures 1 et 2). Les pieds 36 sont fixés au cylindre 14. Les pieds 36 maintiennent le bâti 4 dans sa position normale.

En référence à la figure 2, le filtre 2 comporte huit (8) collecteurs 38. Chaque collecteur 38 forme un entonnoir présentant une forme de révolution autour d'un axe parallèle au vecteur Z. Les collecteurs 38 comprennent une extrémité supérieure circulaire de diamètre $d_{38\_sup}$ fixée sur une surface inférieure du plateau 8. Plus précisément, l'extrémité supérieure de chaque collecteur 38 est fixée respectivement au plateau 8 de sorte à entourer les alésages 12 d'un groupe d'alésages 12-i associé.

Chaque collecteur 38 comprend une extrémité circulaire inférieure coaxiale avec l'extrémité circulaire supérieure et de diamètre $d_{38\_inf}$ largement inférieur au diamètre $d_{38\_sup}$ :

$$2 * d_{38\_inf} \leq d_{38\_sup} \leq 3 * d_{38\_inf}$$

Par son extrémité inférieure, chaque collecteur 38 est raccordé à un conduit d'évacuation 40. Les huit (8) conduits 40 sont formés par des tubes cylindriques dirigés par le vecteur Z à section axiale circulaire s'étendant vers le bas depuis les collecteurs 38.

Le filtre 2 comporte huit (8) vannes guillotine désignées par la référence 42 lorsqu'elles sont considérées dans leur ensemble. Les vannes 42 sont respectivement montées sur les conduits 40. Les vannes 42 sont en communication d'information avec une unité de pilotage 44. L'unité de pilotage 44 peut en particulier ouvrir ou fermer chacune des vannes 42.

Le filtre 2 comporte une vanne de régulation 46. La vanne 46 est une vanne à membrane pneumatique soumise à une pression de fermeture $P_{fermeture}$. Lorsque la pression $P_{fluide\_non\_filtré}$ dans le volume délimité par le plateau 24 et le couvercle 28 dépasse la pression $P_{fermeture}$ de gonflage de la membrane pneumatique, la vanne 46 est ouverte et du fluide peut être évacué via le conduit 34. La pression $P_{fermeture}$ est comprise entre 2 bars et 3 bars.

Le filtre 2 comprend une vanne de régulation 48. La vanne 48 est montée sur le conduit 40. Dans l'exemple illustré, la vanne 48 est à commande électronique mais on peut, sans sortir du cadre de l'invention, envisager tout autre type de vanne. La vanne 48 est capable de maintenir la pression $P_{fluide\_filtré}$ du fluide contenu dans le cylindre 14 entre une pression limite inférieure $P_{lim\_inf}$ et une pression limite supérieure $P_{lim\_sup}$. Dans l'exemple illustré, la pression $P_{lim\_inf}$ est comprise entre un 0,9 bars et 1,1 bars. La pression $P_{lim\_sup}$ est comprise entre 1,9 bars et 2,1 bars.

Le filtre 2 comporte trente-deux (32) éléments filtrant 50. Chaque élément 50 est constitué par une paroi cylindrique dirigée par le vecteur Z à section axiale circulaire. Plus précisément, chaque élément 50 est coaxial par rapport à un alésage cylindrique 12 associé. Les éléments 50 s'étendent axialement entre les plateaux 8 et 24.

La paroi cylindrique des éléments 50 est réalisée en un matériau permettant de filtrer des particules en suspension contenues dans le fluide à filtrer. Dans l'exemple illustré, la paroi cylindrique des éléments 50 est une crépine. Toutefois, on peut bien entendu sans sortir du cadre de l'invention envisager tout autre type de matériau filtrant pour réaliser la paroi cylindrique des éléments 50.

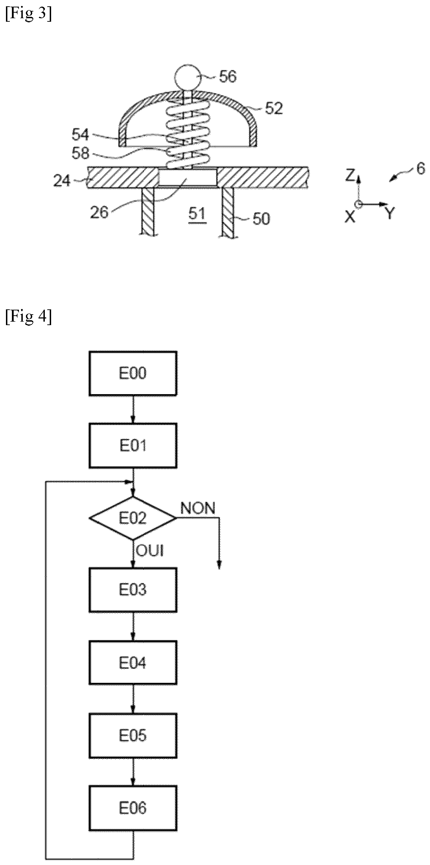

Le volume intérieur de la paroi cylindrique forme une enceinte 51 référencée sur la figure 3. Quel que soit un élément 50, l'enceinte 51 associée est en communication fluidique avec le volume délimité par le plateau 24 et le couvercle 28 via l'alésage 24 coaxial par rapport à l'élément 50, et en communication fluidique avec un collecteur 34 via l'alésage 12 coaxial par rapport à l'élément 50.

Le filtre 2 comporte trente-deux (32) cloches 52. Les cloches 52 sont disposées au-dessus du plateau 24. En d'autres termes, les cloches 52 sont dans le volume délimité par le plateau 24 et le couvercle 28. Chaque cloche 52 est disposée à la verticale d'un alésage 26 et d'un élément 50.

Les vannes 42 sont individuellement désignées par les références 42-1, 42-2, ..., 42-8. Quel que soit un entier i compris entre 1 et 8, le conduit 40 portant la vanne 42-i forme, avec le collecteur 38 auquel il est raccordé, un groupe d'évacuation désigné par la référence {38, 40}-i. Quel que soit un entier i compris entre 1 et 8, les enceintes 51 en communication fluidique avec le groupe d'évacuation {38, 40}-i forment avec les éléments 50 associés et les cloches 52 disposées à la verticale des éléments 50 associés un groupe filtrant {50, 51, 52}-i.

Les cloches 52 sont capables de recouvrir un alésage 26 de sorte à empêcher du fluide de s'écouler depuis le volume délimité par le plateau 24 et le couvercle 28 vers l'enceinte d'un élément 50. Pour ce faire, les cloches 52 sont mécaniquement connectées au plateau 24 par une liaison pivot glissant autour d'un axe parallèle au vecteur Z ou une liaison glissière selon la direction du vecteur Z. Dans l'exemple illustré, quel que soit un entier i compris entre 1 et 8, la cloche 52 du groupe filtrant {50, 51, 52}-i est disposée autour d'une tige 54 coïncidant avec l'axe de révolution de l'élément 50 du groupe filtrant {50, 51, 52}-i et la cloche 52 présente une forme de révolution autour de cet axe de révolution. La tige 54 présente une extrémité axiale supérieure 56 formant un bourrelet.

De ce fait, quel que soit un entier i compris entre 1 et 8, chaque cloche 52 du groupe filtrant {50, 51, 52}-i peut se déplacer en translation axiale entre une position fermée (non représentée) et une position ouverte (illustrée sur la figure 3). En position fermée, la cloche 52 est en contact avec le plateau 24 et interdit le flux de fluide non filtré vers l'enceinte de l'élément 50 du groupe filtrant {50, 51, 52}-i. En position ouverte, la cloche 52 est axialement décalée vers le haut par rapport au plateau 24 et autorise le flux de fluide non filtré vers l'enceinte de l'élément 50 du groupe filtrant {50, 51, 52}-i.

Le filtre 2 comporte trente-deux (32) ressorts hélicoïdaux 58. Chaque ressort 58 est intercalé entre le plateau 24 et une cloche 52 associée. Les ressorts 52 fonctionnent en compression et constituent un moyen de rappel élastique d'une cloche 52 dans sa position illustrée sur la figure 3.

Il va maintenant être décrit en référence à la figure 4 un procédé de décolmatage du filtre 2.

Lors d'un état initial E00 du procédé, du fluide à filtrer est fourni au filtre 2 par le conduit 32. Le fluide à filtrer peut notamment être un liquide. Dans l'exemple de mise en œuvre de la figure 4, le fluide à filtrer est de l'eau chargée en sable. Le fluide filtré est contenu dans le volume délimité par le plateau 24 et le couvercle 28. La pression $P_{fluide\_non\_filtré}$ est inférieure à la pression $P_{fermeture}$ grâce à la vanne 46.

Les cloches 52 sont maintenues dans leur position ouverte par les ressorts 58. Ce faisant, le fluide à filtrer peut pénétrer dans les enceintes 51 des éléments 50. Le fluide à filtrer traverse la paroi cylindrique des éléments 50. Ce faisant, les particules de sable sont retenues par les éléments 50. L'eau filtrée quitte l'enceinte 51 puis emprunte le conduit 20. Grâce à la vanne de régulation 48 et au conduit 22, le volume intérieur du cylindre 14 entourant les éléments 50 est rempli d'eau filtrée à la pression $P_{fluide\_filtré}$ comprise entre 1 bar et 2 bars.

Le procédé comprend une première étape E01 au cours de laquelle on initialise une variable i en lui donnant la valeur 1 :

$$1 \to i$$

Le procédé comprend une deuxième étape E02 de test au cours de laquelle on détermine si la variable i est inférieure ou égale à 8.

Si la réponse à l'étape E02 est OUI, on applique une troisième étape E03 dans laquelle on ouvre la vanne guillotine 42-i. A ce stade, i étant égal à 1, la vanne guillotine 42-1 est ouverte.

L'ouverture de la vanne 42-1 génère une chute de la pression dans les quatre enceintes 51 du groupe filtrant {50, 51, 52}-1. Il en résulte la fermeture des quatre cloches 52 du groupe filtrant {50, 51, 52}-1. De ce fait, le fluide à filtrer ne peut plus pénétrer dans les enceintes 51 du groupe filtrant {50, 51, 52}-1.

La pression $P_{fluide\_filtré}$ devient alors supérieure à la pression régnant dans les enceintes 51 du groupe filtrant {50, 51, 52}-1. Le fluide filtré traverse alors la paroi cylindrique des éléments 50 du groupe filtrant {50, 51, 52}-1 depuis l'extérieur vers l'intérieur. Ce flux de fluide propre expulse les particules de sable prisonnières des parois cylindriques des éléments filtrant 50 du groupe filtrant {50, 51, 52}-1. Ces particules sont ensuite évacuées via le collecteur 38 et le conduit d'évacuation 40 du groupe d'évacuation {38, 40}-1.

Le procédé comprend une étape E04 d'attente. L'étape E04 d'attente permet de maintenir le flux de fluide propre traversant la paroi cylindrique des éléments filtrant du groupe filtrant {50, 51, 52}-i pendant suffisamment de temps pour permettre leur décolmatage. Dans le mode de mise en œuvre illustrée, l'étape E04 dure une seconde. Un tel temps d'attente est adapté à des filtres utilisés pour filtrer les fluides présentant une teneur de l'ordre de 25% en matières en suspension. La durée de l'étape E04 peut bien entendu être ajustée notamment en fonction de la teneur de matières en suspension du fluide à filtrer.

Le procédé comprend une cinquième étape E05 de fermeture de la vanne 42-i. A ce stade, comme i égale 1, on ferme la vanne 42-1. Ce faisant, on augmente la pression dans les enceintes 51 du groupe filtrant {50, 51, 52}-1. Cette augmentation de pression conjuguée à l'effort du ressort 58 soulève les cloches 52 du groupe filtrant {50, 51, 52}-1. Le fluide à filtrer peut alors à nouveau passer dans les enceintes 51 du groupe filtrant {50, 51, 52}-1 qui fonctionne de nouveau comme à l'état initial.

Le procédé comprend une sixième étape E06 d'incrémentation de la variable i :

$$i + 1 \to i$$

A l'issue de l'étape E06, on applique à nouveau l'étape de test E02. Si, à l'issue de l'étape E02, la réponse est NON, il est mis fin au procédé.

Ainsi, après l'itération qui vient d'être décrite, des itérations du procédé sont mises en œuvre dans lesquelles la variable i prend successivement les valeurs 2, 3, 4, 5, 6, 7 et 8, puis il est mis fin au procédé.

De la sorte, le procédé de la figure 4 permet de régénérer progressivement tous les éléments filtrant 50. Grâce à l'utilisation d'un certain nombre de groupes filtrant, la régénération peut être effectuée sans perte de débit significative. En prévoyant entre 4 et 6 éléments filtrant par groupe filtrant, on diminue la longueur du procédé de décolmatage et on diminue l'encombrement occasionné par les groupes d'évacuation. Le procédé de décolmatage peut être mis en œuvre régulièrement, par exemple toutes les dix secondes.

Un tel procédé peut facilement être mis en œuvre de manière automatique, par exemple en configurant de manière appropriée l'unité de pilotage 44.

La régénération des éléments filtrant 50 ne nécessite pas la mise en rotation ou le frottement d'une pièce par rapport à l'autre. Il est alors possible de régénérer fréquemment les éléments filtrant sans occasionner d'usure qui nuirait à l'efficacité de la filtration et/ou de la régénération. Il en résulte une meilleure efficacité du filtre 2 sur une plus longue période.

## Revendications

**1.** Filtre (2) comprenant un bâti (4) comprenant un couvercle (28), un plateau supérieur (24) délimitant avec le couvercle (28) un volume amont, ledit bâti comprenant un plateau inférieur (8) et un cylindre (14) s'étendant entre le plateau inférieur (8) et le plateau supérieur (24) et délimitant un volume aval, le filtre (2) comprenant au moins un moyen filtrant comprenant une enceinte (51) en communication fluidique avec le volume amont et un élément filtrant (50) interposé entre l'enceinte (51) et le volume aval, le moyen filtrant comprenant un moyen de fermeture (52) apte à empêcher la communication fluidique entre le volume amont et l'enceinte (51), le couvercle (28) comprenant un premier conduit d'entrée (32) communiquant avec le volume amont et destiné à recevoir un fluide à filtrer, le cylindre (14) comprenant un premier conduit de sortie (20) communiquant avec le volume aval et destiné à évacuer un fluide filtré, le filtre (2) comprenant un moyen d'évacuation (40, 42) apte à évacuer un fluide contenu dans l'enceinte (51), le plateau supérieur (24) comprenant au moins une perforation (26) traversant ledit plateau supérieur (24) permettant une communication fluidique entre le volume amont et l'enceinte (51), le plateau inférieur (8) comprenant au moins un alésage cylindrique (12), le moyen d'évacuation (40, 42) comprenant un collecteur (38) comprenant une extrémité supérieure fixée au plateau inférieur (8) de sorte à entourer l'alésage (12), un conduit d'évacuation (40) raccordé à l'extrémité inférieure du collecteur (38), et au moins une vanne guillotine (42) montée sur le conduit d'évacuation (40), **caractérisé en ce que** :

- le moyen de fermeture comprenant une cloche (52) disposée au-dessus du plateau supérieur (24) à la verticale de la perforation (26) et d'un élément filtrant (50) et mobile en translation entre une position ouverte dans laquelle le volume amont est en communication fluidique avec l'enceinte (51) et une position fermée dans laquelle la cloche (52) est en contact avec le plateau supérieur (24) et obstrue la perforation (26), le moyen de fermeture comprenant un ressort fonctionnant en compression (58), intercalé entre ladite cloche (52) et le plateau supérieur (24) et formant un moyen de rappel élastique de la cloche (52) en position ouverte, la cloche (52) étant en position fermée lorsque la vanne guillotine est dans une position ouverte, **en ce que** :
- le cylindre (14) comprend un deuxième conduit d'entrée (22) communiquant avec le volume aval et destiné à alimenter le volume aval avec un fluide de rinçage, et le couvercle (28) comprend un deuxième conduit de sortie (34) communiquant avec le volume amont et destiné à permettre l'évacuation du fluide à filtrer en cas de surpression dans le volume amont et **en ce que** :

- le filtre comprend une première vanne (46) montée sur ledit deuxième conduit de sortie (34) et configurée à une pression de fermeture (P_fermeture) comprise entre 2 bars et 3 bar, et une seconde vanne (48) régulatrice en pression montée sur le premier conduit de sortie (20) configurée pour maintenir la pression dans le volume aval entre 1 bar et 2 bars, la première vanne (46) étant configurée pour s'ouvrir lorsque la pression (P_fluide_non_filtré) dans le volume amont est supérieure à la pression de fermeture (P_fermeture).

**2.** Filtre (2) selon la revendication 1, dans lequel le moyen filtrant comprend un premier groupe filtrant ({50, 51, 52}-1) et un second groupe filtrant ({50, 51, 52}-2), chaque groupe filtrant (({50, 51, 52}-1, {50, 51, 52}-2) comprenant respectivement un élément filtrant (50), une enceinte (51) et un moyen de fermeture (52), le moyen d'évacuation comprenant au moins un premier groupe d'évacuation ({38, 40}-1) et un second groupe d'évacuation ({38, 40}-2), chaque groupe d'évacuation ({38, 40}-1, {38, 40}-2) comprenant un collecteur (48), un conduit d'évacuation (40) et une vanne guillotine (42), le premier groupe d'évacuation ({38, 40}-1) étant capable d'évacuer l'enceinte (51) du premier groupe filtrant ({50, 51, 52}-1), le second groupe d'évacuation ({38, 40}-2) étant capable d'évacuer l'enceinte (51) du second groupe filtrant ({50, 51, 52}-2).

**3.** Filtre (2) selon la revendication 2, dans lequel le moyen filtrant comprend un troisième groupe filtrant ({50, 51, 52}-3) comprenant un élément filtrant (50), une enceinte (51) et un moyen de fermeture (52), le collecteur (38) du premier groupe d'évacuation ({38, 40}-1) étant en communication fluidique avec l'enceinte (51) du premier groupe filtrant ({50, 51, 52}-1) et avec l'enceinte (51) du troisième groupe filtrant ({50, 51, 52}-3).

**4.** Filtre (2) selon la revendication 2 ou 3, dans lequel :

$$n = k \times i \quad 3 \leq i \leq 5$$

où n est le nombre de groupes filtrant et k est le nombre de groupes d'évacuations.

**5.** Procédé de décolmatage d'un filtre (2) selon l'une quelconque des revendications précédentes, comprenant, dans cet ordre :

- une étape (E03) dans laquelle la vanne guillotine (42) est ouverte de manière à générer une chute de pression dans l'enceinte (51) du moyen filtrant de sorte à déplacer la cloche (52) dans la position fermée en contact avec le plateau supérieur (24), empêcher la communication fluidique entre le volume amont et l'enceinte (51), et dans laquelle le fluide filtré présent dans le volume aval traverse l'enceinte (51) depuis l'extérieur vers l'intérieur,
- une étape (E04) d'attente dans laquelle le fluide filtré présent dans le volume aval traverse l'enceinte (51) depuis l'extérieur vers l'intérieur pendant une durée,
- une étape d'évacuation du fluide contenu dans l'enceinte (51) via le conduit d'évacuation (40) et
- une étape (E05) de fermeture de la vanne guillotine (42) dans laquelle la vanne guillotine (42) est fermée de manière à générer une augmentation de pression dans l'enceinte (51) du moyen filtrant de sorte à déplacer la cloche (52) dans la position ouverte et autoriser la communication fluidique entre le volume amont et l'enceinte (51).

**6.** Procédé selon la revendication 5, dans lequel la durée de l'étape (E04) d'attente est comprise entre 0,4 secondes et 1,5 secondes.

7. Procédé selon la revendication 5 ou 6 dans lequel le moyen filtrant comprend i groupes filtrant ({50, 51, 52}-i) comprenant un élément filtrant (50), une enceinte (51) et un moyen de fermeture (52), et dans lequel le moyen d'évacuation comprenant i groupes d'évacuation ({38, 40}-i) comprenant un collecteur (48), un conduit d'évacuation (40) et une vanne guillotine (42), avec la variable i comprise entre un et huit, le procédé comprenant

- une étape (E01) préalable à l'étape (E03) d'ouverture de la vanne guillotine (42) lors de laquelle la variable i est initialisée à la valeur 1 ; lors de l'étape (E03) d'ouverture de la vanne guillotine (42), la vanne guillotine (42) du premier groupe d'évacuation ({38, 40}-1) est ouverte de manière à générer la chute de pression uniquement dans l'enceinte (51) du premier groupe filtrant ({50, 51, 52}-1) et dans lequel, le procédé comprenant :

- une étape ultérieure (E06) à l'étape (E05) de fermeture de la vanne guillotine (42) lors de laquelle la variable i est incrémente de 1, les étapes (E01, E03, E04, E05, E06) étant répétée successivement pour toutes les valeurs variables i jusqu'à huit.

**Patentansprüche**

1. Filter (2), der ein Gestell (4) umfasst, das einen Deckel (28) und eine obere Platte (24) umfasst, die mit dem Deckel (28) ein vorgelagertes Volumen begrenzt, wobei das Gestell eine untere Platte (8) und einen Zylinder (14) umfasst, der sich zwischen der unteren Platte (8) und der oberen Platte (24) erstreckt und ein nachgelagertes Volumen begrenzt, wobei der Filter (2) mindestens ein Filtermittel umfasst, das eine Kammer (51) in fluidischer Verbindung mit dem vorgelagerten Volumen und ein Filterelement (50) umfasst, das zwischen der Kammer (51) und dem nachgelagerten Volumen eingefügt ist, wobei das Filtermittel ein Verschlussmittel (52) umfasst, das geeignet ist, die fluidische Verbindung zwischen dem vorgelagerten Volumen und der Kammer (51) zu verhindern, wobei der Deckel (28) eine erste Einlassleitung (32) umfasst, die mit dem vorgelagerten Volumen in Verbindung steht und dazu bestimmt ist, ein zu filterndes Fluid aufzunehmen, wobei der Zylinder (14) eine erste Auslassleitung (20) umfasst, die mit dem nachgelagerten Volumen in Verbindung steht und dazu bestimmt ist, ein gefiltertes Fluid abzulassen, wobei der Filter (2) ein Ablassmittel (40, 42) umfasst, das geeignet ist, ein in der Kammer (51) enthaltenes Fluid abzulassen, wobei die obere Platte (24) mindestens eine Perforation (26) umfasst, die die obere Platte (24) durchquert und eine fluidische Verbindung zwischen dem vorgelagerten Volumen und der Kammer (51) ermöglicht, wobei die untere Platte (8) mindestens eine zylindrische Bohrung (12) umfasst, wobei das Ablassmittel (40, 42) einen Verteiler (38), der ein oberes Ende umfasst, das an der unteren Platte (8) befestigt ist, so dass es die Bohrung (12) umgibt, eine Ablassleitung (40), die an das untere Ende des Verteilers (38) angeschlossen ist, und mindestens ein Absperrventil (42) umfasst, das an die Ablassleitung (40) montiert ist, **dadurch gekennzeichnet, dass**:

- das Verschlussmittel eine Glocke (52) umfasst, die über der oberen Platte (24) senkrecht zur Perforation (26) und einem Filterelement (50) angeordnet ist, das zwischen einer geöffneten Position, in der das vorgelagerte Volumen in fluidischer Verbindung mit der Kammer (51) steht, und einer geschlossenen Position, in der die Glocke (52) mit der oberen Platte (24) in Kontakt ist und die Perforation (26) verschließt, verschiebbar ist, wobei das Verschlussmittel eine Druckfeder (58) umfasst, die zwischen der Glocke (52) und der oberen Platte (24) eingefügt ist und ein elastisches Rückstellmittel für die Glocke (52) in der geöffneten Position bildet, wobei die Glocke (52) in geschlossener Position ist, wenn sich das Absperrventil in einer geöffneten Position befindet, dadurch, dass:
- der Zylinder (14) eine zweite Einlassleitung (22) umfasst, die mit dem nachgelagerten Volumen in Verbindung steht und dazu bestimmt ist, das nachgelagerte Volumen mit einem Spülfluid zu versorgen, und der Deckel (28) eine zweite Auslassleitung (34) umfasst, die mit dem vorgelagerten Volumen in Verbindung steht und dazu bestimmt ist, das Ablassen des zu filternden Fluids bei Überdruck in dem vorgelagerten Volumen zu ermöglichen, und dadurch, dass:

- der Filter ein erstes Ventil (46), das an der zweiten Auslassleitung (34) montiert und auf einen Schließdruck ($P_{fermeture}$) zwischen 2 bar und 3 bar konfiguriert ist, und ein zweites Druckregelventil (48) umfasst, das an der ersten Auslassleitung (20) montiert und so konfiguriert ist, dass es den Druck in dem nachgelagerten Volumen zwischen 1 bar und 2 bar hält, wobei das erste Ventil (46) so konfiguriert ist, dass es sich öffnet, wenn der Druck ($P_{fluid\_non\_filtré}$) in dem vorgelagerten Volumen höher ist als der Schließdruck ($P_{fermeture}$).

**2.** Filter (2) nach Anspruch 1, wobei das Filtermittel eine erste Filtergruppe ({50, 51, 52}-1) und eine zweite Filtergruppe ({50, 51, 52}-2) umfasst, wobei jede Filtergruppe (({50, 51, 52}-1, {50, 51, 52}-2) jeweils ein Filterelement (50), eine Kammer (51) und ein Verschlussmittel (52) umfasst, wobei das Ablassmittel mindestens eine erste Ablassgruppe ({38, 40}-1) und eine zweite Ablassgruppe ({38, 40}-2) umfasst, wobei jede Ablassgruppe ({38, 40}-1, {38, 40}-2) einen Verteiler (48), eine Ablassleitung (40) und ein Absperrventil (42) umfasst, wobei die erste Ablassgruppe ({38, 40}-1) in der Lage ist, die Kammer (51) der ersten Filtergruppe ({50, 51, 52}-1) zu entleeren, wobei die zweite Ablassgruppe ({38, 40}-2) in der Lage ist, die Kammer (51) der zweiten Filtergruppe ({50, 51, 52}-2) entleeren.

**3.** Filter (2) nach Anspruch 2, wobei das Filtermittel eine dritte Filtergruppe ({50, 51, 52}-3) umfasst, die ein Filterelement (50), eine Kammer (51) und ein Verschlussmittel (52) umfasst, wobei der Verteiler (38) der ersten Ablassgruppe ({38, 40}-1) in fluidischer Verbindung mit der Kammer (51) der ersten Filtergruppe ({50, 51, 52}-1) und mit der Kammer (51) der dritten Filtergruppe ({50, 51, 52}-3) steht.

**4.** Filter (2) nach Anspruch 2 oder 3, wobei:

$$n = k \times i \quad 3 \leq i \leq 5$$

wobei n die Anzahl der Filtergruppen ist und k die Anzahl der Ablassgruppen ist.

**5.** Verfahren zum Reinigen eines Filters (2) nach einem der vorhergehenden Ansprüche, umfassend in dieser Reihenfolge:

- einen Schritt (E03), in dem das Absperrventil (42) geöffnet ist, um einen Druckabfall in der Kammer (51) des Filtermittels zu erzeugen, so dass die Glocke (52) in die geschlossene Position in Kontakt mit der oberen Platte (24) bewegt wird, wodurch die fluidische Verbindung zwischen dem vorgelagerten Volumen und der Kammer (51) verhindert wird, und in dem das in dem nachgelagerten Volumen vorhandene gefilterte Fluid die Kammer (51) von außen nach innen durchströmt,
- einen Warteschritt (E04), in dem das in dem nachgelagerten Volumen vorhandene gefilterte Fluid die Kammer (51) für eine Dauer von außen nach innen durchströmt,
- einen Schritt des Ablassens des in der Kammer (51) enthaltenen Fluids über die Ablassleitung (40), und
- einen Schritt (E05) des Schließens des Absperrventils (42), wobei das Absperrventil (42) geschlossen ist, um einen Druckanstieg in der Kammer (51) des Filtermittels zu erzeugen, so dass die Glocke (52) in die geöffnete Position bewegt wird und die fluidische Verbindung zwischen dem vorgelagerten Volumen und der Kammer (51) ermöglicht wird.

**6.** Verfahren nach Anspruch 5, wobei die Dauer des Warteschritts (E04) zwischen 0,4 Sekunden und 1,5 Sekunden beträgt.

**7.** Verfahren nach Anspruch 5 oder 6, wobei das Filtermittel i Filtergruppen ({50, 51, 52}-i) umfasst, die ein Filterelement (50), eine Kammer (51) und ein Verschlussmittel (52) umfassen, und wobei das Ablassmittel i Ablassgruppen ({38, 40}-i) umfasst, die einen Verteiler (48), eine Ablassleitung (40) und ein Absperrventil (42) umfassen, wobei die Variable i zwischen eins und acht liegt, das Verfahren umfassend

- einen Schritt (E01) vor dem Schritt (E03) des Öffnens des Absperrventils (42), bei dem die Variable i auf den Wert 1 initialisiert wird; wobei während des Schritts (E03) des Öffnens des Absperrventils (42) das Absperrventil (42) der ersten Ablassgruppe ({38, 40}-1) geöffnet wird, so dass der Druckabfall nur in der Kammer (51) der ersten Filtergruppe ({50, 51, 52}-1) erzeugt wird, das Verfahren umfassend:

- einen nachfolgenden Schritt (E06) nach dem Schritt (E05) des Schließens des Absperrventils (42), bei dem die Variable i um 1 erhöht wird, wobei die Schritte (E01, E03, E04, E05, E06) nacheinander für alle variablen Werte i bis acht wiederholt werden.

**Claims**

**1.** Filter (2) comprising a frame (4) comprising a cover (28), an upper plate (24) which defines an upstream volume with the cover (28), said frame comprising a lower plate (8) and a cylinder (14) extending between the lower plate (8) and the upper plate (24) and defining a downstream volume, the filter (2) comprising at least one filter means comprising a chamber (51) in fluid communication with the upstream volume and a filter element (50) interposed between the chamber (51) and the downstream volume, the filter means comprising a closing means (52) capable of preventing fluid communication between the upstream volume and the chamber (51), the cover (28) comprising a first inlet duct (32) communicating with the upstream volume and intended to receive a fluid to be filtered, the cylinder (14) comprising a first outlet duct (20) communicating with the downstream volume and intended to discharge a filtered fluid, the filter (2) comprising a discharge means (40, 42) capable of discharging a fluid contained in the chamber (51), the upper plate (24) comprising at least one perforation (26) passing through said upper plate (24), allowing fluid communication between the upstream volume and the chamber (51), the lower plate (8) comprising at least one cylindrical bore (12), the discharge means (40, 42) comprising a collector (38) comprising an upper end secured to the lower plate (8) so as to surround the bore (12), a discharge duct (40) connected to the lower end of the collector (38), and at least one guillotine valve (42) mounted on the discharge duct (40), **characterised in that**:

- the closing means comprising a dome (52) positioned above the upper plate (24) vertically above the perforation (26) and a filter element (50) that is movable in translation between an open position, in which the upstream volume is in fluid communication with the chamber (51), and a closed position, in which the dome (52) is in contact with the upper plate (24) and obstructs the perforation (26), the closing means comprising a compression spring (58), interposed between said dome (52) and the upper plate (24), and forming an elastic return means of the dome (52) in the open position, the dome (52) being in the closed position when the guillotine valve is in the open position, **in that**:
- the cylinder (14) comprises a second inlet duct (22) communicating with the downstream volume and intended to supply the downstream volume with a flushing fluid, and the cover (28) comprises a second outlet duct (34) communicating with the upstream volume and intended to allow the discharge of the fluid to be filtered in the event of overpressure in the upstream volume, and **in that**:

- the filter comprises a first valve (46) mounted on the said second outlet duct (34) and set at a closing pressure ($P_{closing}$) of between 2 bar and 3 bar, and a second pressure regulating valve (48) mounted on the first outlet duct (20) set to maintain the pressure in the downstream volume between 1 bar and 2 bar, with the first valve (46) being configured to open when the pressure ($P_{unfiltered\_fluid}$) in the upstream volume exceeds the closing pressure ($P_{closing}$).

2. Filter (2) according to claim 1, wherein the filter means comprises a first filter group (\{50, 51, 52\}-1) and a second filter group (\{50, 51, 52\}-2), each filter group (\{50, 51, 52\}-1, \{50, 51, 52\}-2) respectively comprising a filter element (50), a chamber (51), and a closing means (52), the discharge means comprising at least a first discharge group (\{38, 40\}-1) and a second discharge group (\{38, 40\}-2), each discharge group (\{38, 40\}-1, \{38, 40\}-2) comprising a collector (48), a discharge duct (40), and a guillotine valve (42), the first discharge group (\{38, 40\}-1) being capable of discharging the chamber (51) of the first filter group (\{50, 51, 52\}-1), and the second discharge group (\{38, 40\}-2) being capable of discharging the chamber (51) of the second filter group (\{50, 51, 52\}-2).

3. Filter (2) according to claim 2, wherein the filter means comprises a third filter group (\{50, 51, 52\}-3) comprising a filter element (50), a chamber (51), and a closing means (52), the collector (38) of the first discharge group (\{38, 40\}-1) being in fluid communication with the chamber (51) of the first filter group (\{50, 51, 52\}-1) and with the chamber (51) of the third filter group (\{50, 51, 52\}-3).

4. Filter (2) according to claim 2 or 3, wherein

$$n = k \ x \ i \quad 3 \leq i \leq 5$$

where n is the number of filter groups and k is the number of discharge groups.

5. Method for unclogging a filter (2) according to any one of the preceding claims, comprising, in this order:

- a step (E03) in which the guillotine valve (42) is opened so as to generate a pressure drop in the chamber (51) of the filter means so as to move the dome (52) into the closed position in contact with the upper plate (24), preventing fluid communication between the upstream volume and the chamber (51), and wherein the filtered fluid present in the downstream volume passes through the chamber (51) from the outside to the inside,
- a waiting step (E04) during which the filtered fluid present in the downstream volume passes through the chamber (51) from the outside to the inside for a certain period of time,
- a step of discharging the fluid contained in the chamber (51) through the discharge duct (40) and
- a step (E05) of closing the guillotine valve (42), in which the guillotine valve (42) is closed so as to generate an increase in pressure in the chamber (51) of the filter means, so as to move the dome (52) into the open position and allow fluid communication between the upstream volume and the chamber (51).

6. Method according to claim 5, wherein the duration of the waiting step (E04) is between 0.4 seconds and 1.5 seconds.

7. Method according to claim 5 or 6, wherein the filter means comprises i filter groups ({50, 51, 52}-i) comprising a filter element (50), a chamber (51), and a closing means (52), and wherein the discharge means comprises i discharge groups ({38, 40}-i) comprising a collector (48), a discharge duct (40), and a guillotine valve (42), with the variable i being between one and eight, the method comprising

    - a step (E01) preceding step (E03) of opening the guillotine valve (42), during which the variable i is initialised to the value 1; during step (E03) of opening the guillotine valve (42), the guillotine valve (42) of the first discharge group ({38, 40}-1) is opened so as to generate the pressure drop only in the chamber (51) of the first filter group ({50, 51, 52}-1), and wherein the method comprises:

        - a step (E06) following step (E05) of closing the guillotine valve (42), during which the variable i is incremented by 1, with steps (E01, E03, E04, E05, E06) being successively repeated for all variable values of i up to eight.

[Fig 1]

[Fig 2]

[Fig 3]

[Fig 4]

**RÉFÉRENCES CITÉES DANS LA DESCRIPTION**

**Documents brevets cités dans la description**

- DE 3301694